(19) Europäisches Patentamt / European Patent Office / Office européen des brevets

(11) **EP 1 576 526 B1**

(12) **FASCICULE DE BREVET EUROPEEN**

(45) Date de publication et mention
de la délivrance du brevet:
**24.10.2018 Bulletin 2018/43**

(21) Numéro de dépôt: **03813627.1**

(22) Date de dépôt: **17.12.2003**

(51) Int Cl.:
***G06T 7/00*** *(2017.01)*

(86) Numéro de dépôt international:
**PCT/FR2003/003768**

(87) Numéro de publication internationale:
**WO 2004/057512 (08.07.2004 Gazette 2004/28)**

(54) **PROCÉDE DE DéTERMINATION D'UNE STRUCTURE EN 3D A PARTIR D'UNE IMAGE EN 2D, NOTAMMENT LA STRUCTURE D'UN OS**

VERFAHREN ZUR BESTIMMUNG EINER DREIDIMENSIONALEN STRUKTUR AUS EINEM ZWEIDIMENSIONALEN BILD, INSBESONDERE DIE STRUKTUR EINES KNOCHENS

METHOD FOR DETERMINING A THREE-DIMENSIONAL STRUCTURE FROM A TWO-DIMENSIONAL IMAGE, IN PARTICULAR A BONE STRUCTURE

(84) Etats contractants désignés:
**AT BE BG CH CY CZ DE DK EE ES FI FR GB GR HU IE IT LI LU MC NL PT RO SE SI SK TR**

(30) Priorité: **17.12.2002 FR 0216069**

(43) Date de publication de la demande:
**21.09.2005 Bulletin 2005/38**

(73) Titulaire: **MED-IMAPS**
**33600 Pessac (FR)**

(72) Inventeur: **Pothuaud, Laurent**
**33950 Lège Cap Ferret (FR)**

(74) Mandataire: **Aquinov**
**Allée de la Forestière**
**33750 Beychac et Caillau (FR)**

(56) Documents cités:
**US-A- 5 915 036     US-A- 5 931 780**
**US-B1- 6 226 393     US-B1- 6 385 283**

- **MAJUMDAR S ET AL: "EVALUATION OF TECHNICAL FACTORS AFFECTING THE QUANTIFICATION OF TRABECULAR BONE STRUCTURE USING MAGNETIC RESONANCE IMAGING" BONE, PERGAMON PRESS., OXFORD, GB, vol. 17, no. 4, octobre 1995 (1995-10), pages 417-430, XP008009878 ISSN: 8756-3282**
- **GORDON C L ET AL: "IN VIVO ASSESSMENT OF TRABECULAR BONE STRUCTURE AT THE DISTAL RADIUS FROM HIGH-RESOLUTION MAGNETIC RESONANCE IMAGES" MEDICAL PHYSICS, AMERICAN INSTITUTE OF PHYSICS. NEW YORK, US, vol. 24, no. 4, 1 avril 1997 (1997-04-01), pages 585-593, XP000728993 ISSN: 0094-2405**

**Description**

La présente invention concerne un procédé de détermination d'une structure en 3D à partir d'une image en 2D, notamment celle d'un os.

L'ostéoporose est une maladie qui affecte en grand nombre surtout les femmes après la ménopause vers l'âge de 50 ans sachant que cette maladie peut affecter toute personne et à tout âge. Elle est caractérisée par une faible masse osseuse et une détérioration du tissu osseux. Ces dégradations conduisent à des risques importants de fractures particulièrement de la hanche, de la colonne vertébrale et du poignet.

Il existe bien sûr un certain nombre de facteurs de risques mais ceci ne suffit pas pour déterminer la probabilité pour une personne de se fracturer un élément de son squelette sachant qu'il n'y a aucun symptôme préalable.

Cette maladie est courante dans la population et devrait aller en s'étendant du fait de la sédentarisation notamment et du vieillissement de la population.

Or le traitement des personnes affectées après fracture est très long et très coûteux car ce sont des soins à long terme. Les conséquences sont souvent graves car conduisant à des invalidités voire à la mort des patients.

Aussi est-il nécessaire de prévenir ce type d'affection mais à condition de déterminer le risque de fracture, ce qui est du seul ressort du praticien.

Si l'on arrive à prédire les risques, le praticien dispose alors de traitements par hormonothérapie et par prise d'autres produits de la pharmacopée comme la calcitonine ou les biphosphonates, en plus de conseils d'hygiène de vie pour tenter d'enrayer cette affection.

Il existe des appareillages pour déterminer la densité osseuse appelés densitomètres.

On peut penser que dès lors que l'on connaît la densité osseuse, en comparant avec des courbes étalon, le praticien peut alors déterminer les risques et établir un diagnostic adapté et prescrire un traitement satisfaisant.

C'est ce qui est couramment utilisé.

Par la demande de brevet US 5 774 520, on sait que la probabilité d'une fracture est directement liée à la densité osseuse.

Les densitomètres disponibles dans le commerce utilisent les rayons X ou les rayons gamma de faible énergie. L'absorption étant proportionnelle à la densité de l'os, on peut donc penser à corréler les deux pour avoir un résultat satisfaisant permettant des comparaisons. Ce brevet prévoit un travail avec deux sources d'émission de photons en sorte de traiter la dispersion engendrée par le fait que les matières osseuses peuvent être considérées comme homogènes mais que les autres matières liquides, les tissus musculaires, les cartilages ne peuvent être considérés comme une matière unique, homogène.

Un autre brevet US 6 385 283 utilise la densité mais combine cette mesure avec des images permettant de déterminer les risques de fracture. Ces images sont réalisées sur la colonne vertébrale du patient et l'opérateur détermine la présence d'amorces de fractures. De plus, comme dans l'art antérieur connu, ces informations sont comparées avec des données acquises au fur et à mesure sur de très nombreux cas. Ce diagnostic est affiné par le praticien à partir des antécédents du patient et par introduction des facteurs de risques supplémentaires.

La demande de brevet WO 86/07531 propose de réaliser une image d'un os donné, par exemple le calcanéum, à un âge auquel le patient présente normalement sa plénitude de masse osseuse. Ensuite, le procédé consiste à réaliser des images successives de ce même os pour permettre au praticien de réaliser des comparaisons et de déterminer l'évolution afin de conclure sur le degré de risque de fracture.

Toutes ces méthodes et autres dispositifs sont basés sur la seule mesure de la densité de la matière osseuse.

Or pour que le praticien arrive à un diagnostic satisfaisant, il faut qu'il ait des informations autres que la seule densité.

La définition de l'ostéoporose est donnée par l'Organisation Mondiale de la Santé : "*désordre caractérisé par une faible masse osseuse et des altérations de la microarchitecture du tissu osseux, conduisant à augmenter la fragilité de l'os et en conséquence à augmenter le risque de fracture*"

C'est ainsi qu'il existe des analyses de matière osseuse in vivo plus sophistiquées à partir d'analyses de sang et d'urines faisant intervenir des marqueurs osseux mais ces analyses sont coûteuses, contraignantes pour le patient et, de toutes les façons, donnent des indications de composition de la matière mais pas d'indications sur sa structure.

Or, on peut comprendre que la matière osseuse présente une résistance différente suivant qu'il y a plus ou moins de matière en quantité ce qui résulte de la mesure de densité. Par contre, pour une même densité osseuse donc pour une même quantité de matière, suivant l'architecture de la structure osseuse, la résistance mécanique peut varier grandement.

Ce qui est utile pour un praticien, ce sont les propriétés mécaniques de l'os d'un patient induisant directement les risques de fracture. Quand il y a diminution de la résistance osseuse, il y a conjugaison de deux facteurs, la baisse de la densité minérale osseuse DMO et l'altération de la structure osseuse.

A ce jour, il n'existe pas de moyens permettant de déterminer la structure osseuse. On peut utiliser de l'imagerie par résonance magnétique ou le scanner mais ce sont des examens lourds et coûteux, surtout s'il faut effectuer un suivi longitudinal des patients.

De plus, la capture d'images en 3D à partir de moyens d'imagerie est pour l'instant limitée par les capacités de ces moyens car la résolution spatiale est supérieure aux dimensions de la plupart des travées de liaison permettant de réaliser la connectivité, c'est-à-dire les liaisons entre les noeuds du réseau en trois dimensions.

Le procédé selon la présente invention est maintenant décrit en détail, afin de permettre par l'analyse d'une image 2D d'estimer les paramètres mécaniques.

Selon l'invention, le procédé de détermination de la résistance mécanique d'un os selon l'invention, à partir d'une image 2D numérisée, obtenue par imagerie, se caractérise en ce que l'on réalise une corrélation entre la densité minérale osseuse DMO déterminée à partir de cette image 2D par tout moyen adapté à ce type d'image et un paramètre de structure obtenu à partir de la même image 2D. Plus particulièrement, on recourt à une corrélation de type exponentielle.

On utilise cette corrélation associant la densité minérale osseuse et ledit paramètre de structure pour déterminer la contrainte ultime $C_u$ de l'os.

De façon plus précise, on détermine le paramètre de structure $\underline{\alpha}$, obtenu par la succession des étapes suivantes :

a) choisir au hasard un pixel de l'image 2D qui est à un niveau de gris h(0),
b) choisir une droite issue de ce point ayant une direction également déterminée au hasard,
c) se déplacer d'une distance $\underline{r}$ sur cette droite, h(r) étant le niveau de gris de ce nouveau point,
d) calculer la variance des niveaux de gris avec la formule : $V(r) = [h(r) - h(0)]^2$,
e) tracer la courbe associée à V(r) en échelle log-log, et
f) déterminer la pente de cette courbe log-log qui représente ledit paramètre $\underline{\alpha}$.

Afin d'améliorer la précision, on répète les étapes a) à d) un nombre de fois suffisamment grand pour faire converger la fonction variance V(r), moyennée sur l'ensemble des itérations.

Selon une autre caractéristique de l'invention, on réalise une corrélation entre la densité minérale osseuse, DMO, obtenue à partir de cette image 2D et ledit paramètre $\underline{\alpha}$ évalué à partir de la même image 2D suivant le modèle mathématique :

$$C_u' = b_0 + b_1 * exp\,(b_2 * DMO) * \alpha$$

- avec $b_0$, $b_1$, $b_2$ qui sont des coefficients obtenus par régression non linéaire et $C_u'$ la prédiction de la contrainte ultime $C_u$ de l'os.

On détermine une corrélation entre le paramètre $\underline{\alpha}$ et un paramètre 3D du réseau trabéculaire de l'os et un paramètre 3D peut être la densité de connectivité $\chi_v$

Pour supporter cette description, des dessins sont annexés et les figures qu'ils présentent, illustrent la description et montrent essentiellement des résultats obtenus.

- figure 1 : courbe des résultats avec un modèle linéaire, $C_u$ en fonction de $C_{u'}$
- figure 2 : courbe des résultats avec un modèle exponentiel, $C_u$ en fonction de $C_{u'}$
- figure 3 : représentation graphique de $C_u$ en fonction de $\chi_v$
- figure 4 : représentation de $f_s$ en fonction de $\chi_v$
- figure 5 : courbe de la fonction V(r)
- figure 6 : détermination du paramètre $\alpha$ à partir de la courbe log-log de la fonction V(r)
- figure 7 : courbe DMO en fonction de $f_s$
- figure 8 : courbe de $\alpha$ en fonction de $\chi_v$
- figure 9 : courbe DMO en fonction de $\underline{\alpha}$
- figure 10 : modèle linéaire $C_u$ en fonction de DMO
- figure 11 : courbe de $C_u$ en fonction $C_{u'}$.

L'étude porte sur un os trabéculaire ou spongieux qui constitue environ 20% de la matière osseuse. L'os cortical qui l'entoure assure la rigidité de l'os complet et donc du squelette tandis que l'os trabéculaire assure la reprise et la résistance aux forces de compression.

Selon l'invention, on considère que la structure trabéculaire comprend des travées qui sont interconnectées et la résistance mécanique de l'ensemble résulte de cette connectivité, c'est-à-dire du nombre de boucles fermées. La résistance mécanique résulte aussi du degré de minéralisation de ces travées, minéralisation qui est un paramètre important.

Le procédé consiste à analyser une image numérisée obtenue dans le cas présent, à partir d'une émission de rayons X. Cette image est une projection sur une surface d'une structure 3D ayant été traversée par les photons émis.

Chaque pixel qui constitue l'image peut être analysé indépendamment mais alors on ne peut déterminer que la densité minérale osseuse DMO si bien qu'il convient non seulement d'analyser un pixel de façon isolée mais de les analyser les uns par rapport aux autres.

Le spectre du rayonnement doit être le plus monochromatique possible afin d'éviter une trop forte dérive dans l'énergie des photons.

En effet, si l'énergie varie la pénétration variera et donnera des nuances de gris sur l'image pouvant induire des erreurs en faisant croire à une absorption là où il n'y en a pas.

A partir de cette image obtenue avec un spectre étroit, on sait que chaque volume élémentaire subit une action directe des photons, perpendiculairement mais aussi une action indirecte des rayons incidents diffusés par les volumes élémentaires voisins après qu'ils aient été eux-mêmes traversés.

Afin de supprimer la part de diffusion, on peut utiliser de préférence deux énergies distinctes. On dispose de 2 équations à 2 inconnues et on peut donc déduire la part d'atténuation réelle qui intéresse directement le présent procédé et la part résultant de la diffusion.

Si l'on recherche la contrainte ultime $C_u$ (MPa), il faut tenir compte des paramètres suivants :

- $V_0$: volume d'analyse ($mm^3$)
- $V_s$ : volume du solide ($mm^3$)
- $f_s$ : fraction volumique de solide

avec la relation $f_s = V_s / V_0$

- $\beta_0$ : nombre d'amas de la partie solide (c'est-à-dire l'ensemble des parties connectées ou disconnectées), ce nombre est généralement égal à 1.
- $\beta_2$ : nombre de surfaces internes, c'est-à-dire les trous résultant de la micro porosité interne des travées or à l'échelle de travail, cette porosité ne se voit pas, ce nombre est généralement égal à 0.
- $N_{EP}$ : nombre d'Euler-Poincaré
- $\chi$ : connectivité

avec la relation $\chi = \beta_0 + \beta_2 - N_{EP}$

- $\chi_v$ : densité de connectivité ($mm^{-3}$)

avec la relation $\chi_v = \chi / V_0$

Le procédé selon la présente invention vise à permettre de corréler deux paramètres mesurables et de trouver la relation qui les lie.

1 / Si l'on utilise un modèle linéaire tel que :

$$C_u' = a_0 * f_s + a_1$$

- $C_u'$ étant une valeur prédite de $C_u$
- $a_0$ et $a_1$ sont des coefficients de régression linéaire,

il s'agit là d'une simple corrélation de $C_u$ avec $f_s$.

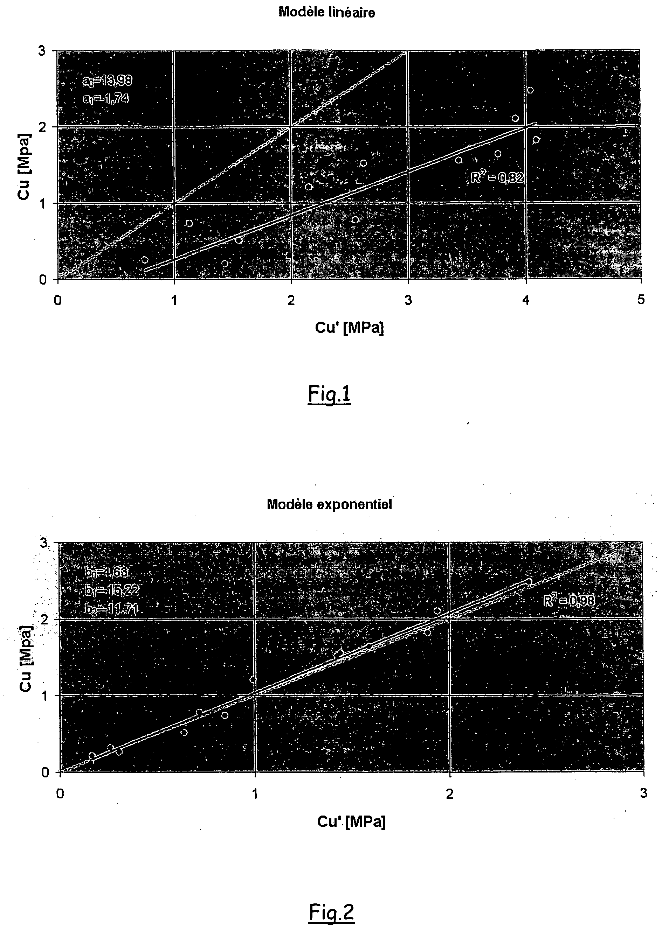

La courbe obtenue est représentée sur la figure 1 et l'on constate que la dispersion est très importante. Si l'on se place par exemple à $f_s$ constant, l'écart des valeurs de $C_u$ est important.

On ne peut retenir ce modèle linéaire dont les résultats sont insuffisants en précision mais qui peut néanmoins servir de comparatif.

2/ Si l'on utilise un modèle exponentiel tel que :

$$C_u' = b_0 + b_1 * exp(b_2 * f_s) * \chi_v$$

Avec $b_0$, $b_1$, $b_2$ qui sont des coefficients obtenus par régression non linéaire (méthode des moindres carrés généralisée) et $C_u'$ la prédiction de la contrainte ultime $C_u$ de l'os.

La dispersion est fortement limitée, voir figure 2. $C_u$' est estimé à partir de $f_s$ et $\chi_v$.

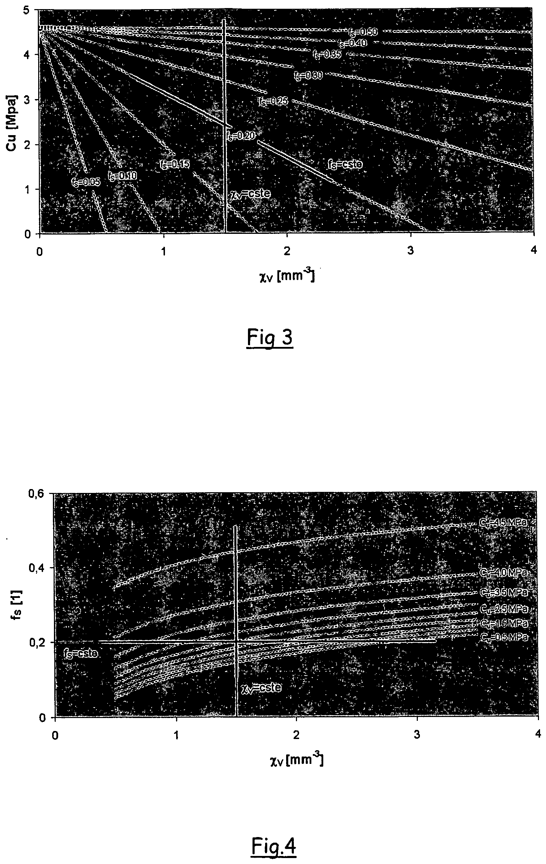

Ces variations sont représentées sur la figure 3.

Si $f_s$ et $\chi_v$ augmentent, $C_u$ augmente. Ceci est parfaitement naturel, si la fraction volumique de solide augmente et la connectivité augmente, alors la contrainte ultime augmente.

Si on fixe $\chi_v$ alors $C_u$ est directement fonction de $f_s$, de façon exponentielle. A connectivité constante, la contrainte ultime augmente en fonction de l'augmentation de la densité osseuse.

Si on fixe $f_s$ alors $C_u$ est directement fonction de $\chi_v$, de façon linéaire mais la contrainte ultime $C_u$ diminue lorsque la connectivité augmente.

Si la fraction solide est constante, on constate que la résistance ultime $C_u$ diminue linéairement en fonction de la connectivité.

Plus on a de noeuds dans une structure et plus cette structure devient fragile, ceci de façon surprenante, contrairement à un préjugé bien établi.

On peut alors tracer le modèle de représentation de la figure 4 qui montre les valeurs de $C_u$.

Pour la détermination de la connectivité, il faut donc trouver un paramètre qui suive une même loi et qui soit le plus indépendant possible de la densité osseuse pour ne pas être influencé.

On pourrait réaliser un calcul à partir de deux paramètres mesurables comme la fraction volumique osseuse et la connectivité, ces deux paramètres étant obtenus notamment par Imagerie à Résonance Magnétique.

Par contre, l'obtention des valeurs par cette méthode met en oeuvre des appareillages coûteux, peu disponibles, ce qui conduit à des prédictions d'un prix de revient élevé interdisant un suivi longitudinal et donc une diffusion massive auprès des patients.

Il faut donc pouvoir trouver deux valeurs mesurables par exemple à partir d'une simple densitométrie, qui est, elle, tout à fait abordable et qui peut être renouvelée régulièrement. En effet, des densitométries sont déjà réalisées de façon massive pour de nombreuses applications. La diffusion auprès des patients peut être très importante.

Le procédé selon la présente invention consiste à déterminer ces deux paramètres mesurables comme la fraction volumique osseuse et la connectivité, ou plus exactement des paramètres qui pourraient leur être corrélés de façon suffisamment étroite pour donner des résultats satisfaisants.

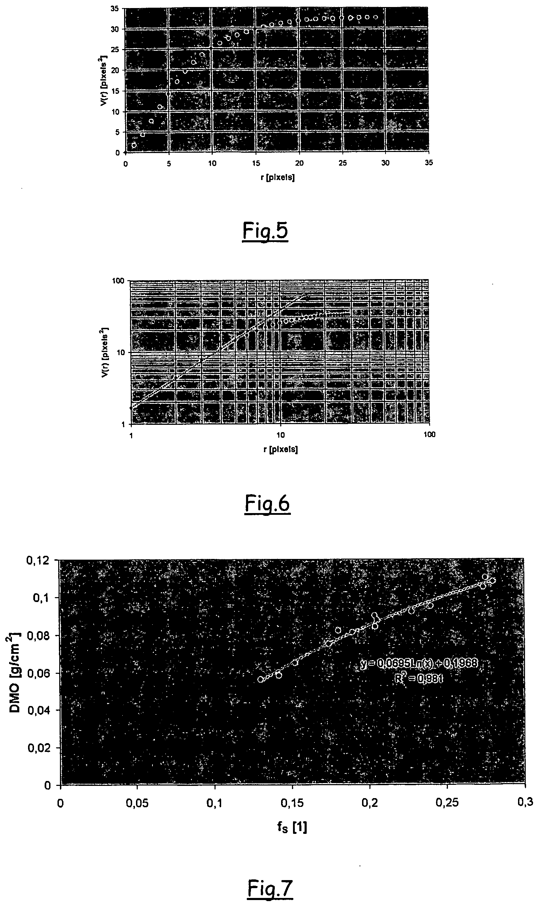

Le premier paramètre rapidement mesurable et fiable est la densité minérale osseuse. Des appareils ont été développés pour effectuer ces mesures de façon fiable et reproductible. Si l'on trace la courbe DMO en fonction de $f_s$, on constate que la dispersion est faible et que l'on peut utiliser DMO en lieu et place de $f_s$. Voir figure 7. Le premier paramètre est obtenu.

Le second paramètre est appelé $\underline{\alpha}$ et déterminé à partir d'une image 2D numérisée par exemple obtenue avec un rayonnement X.

Pour déterminer ce nouveau paramètre $\underline{\alpha}$, on choisit tout d'abord au hasard un pixel de l'image 2D qui est à un niveau de gris h(0).

On choisit ensuite une droite issue de ce point ayant une direction déterminée également au hasard.

On se déplace d'une distance $\underline{r}$ sur cette droite, h(r) étant le niveau de gris de ce nouveau point.

On calcule alors la variance des niveaux de gris, ce qui donne :

$$V(r) = [h(r) - h(0)]^2$$

Le processus est itératif, avec une répétition de ces étapes un nombre de fois suffisamment grand, et aléatoire pour déterminer $\underline{\alpha}$. On fait ainsi converger la fonction variance V(r) moyennée sur l'ensemble des itérations. Ceci permet d'obtenir par calcul un ensemble de points et la courbe associée est représentée sur la figure 5.

Ainsi, plus on détermine de points ayant un même niveau de gris à proximité du pixel choisi, plus on se trouve dans la matière et donc plus on est homogène et plus on doit trouver de noeuds de connexion.

Si l'on trace la courbe log-log de cette fonction, figure 6, on trouve sur les cinq premiers points en l'occurrence, un comportement linéaire et la pente de cette droite est le coefficient dénommé $\underline{\alpha}$ et propre à la présente invention.

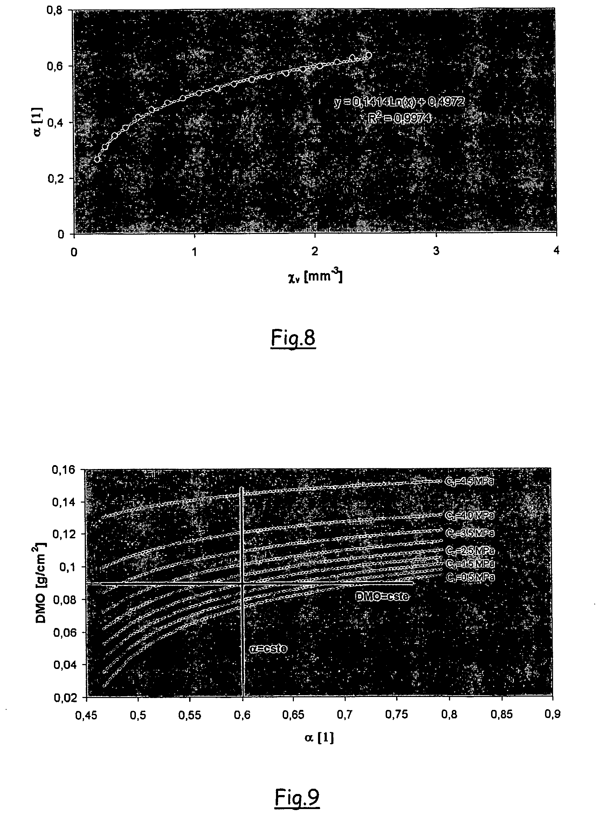

Si l'on trace maintenant la courbe $\underline{\alpha}$ en fonction de la connectivité volumique $\chi_v$, figure 8, on constate qu'il y a une corrélation suffisante pour que l'on puisse remplacer $\chi_v$ par $\underline{\alpha}$.

On peut déduire le diagramme de la figure 9 de ces courbes précédentes, diagramme qui montre la relation entre DMO, $\underline{\alpha}$ et $C_u$.

DMO et $\underline{\alpha}$ sont deux paramètres directement mesurables et/ou pour le moins calculables à partir d'une même image en 2D.

On constate sur ce diagramme que lorsque la densité minérale osseuse reste constante, la contrainte ultime diminue lorsque $\underline{\alpha}$ augmente.

Ceci est bien équivalent au modèle exponentiel précédemment indiqué avec la fraction osseuse en fonction de la connectivité, voir figure 4, sauf que la connectivité $\chi_v$ n'était pas mesurable directement alors que $\underline{\alpha}$ est calculé à

partir de l'image 2D, donc quantifiable.

On peut donc écrire la même relation mais avec les paramètres déterminables à partir de la même image :

$$C_u' = b_0 + b_1 * \exp(b_2 * DMO) * \alpha$$

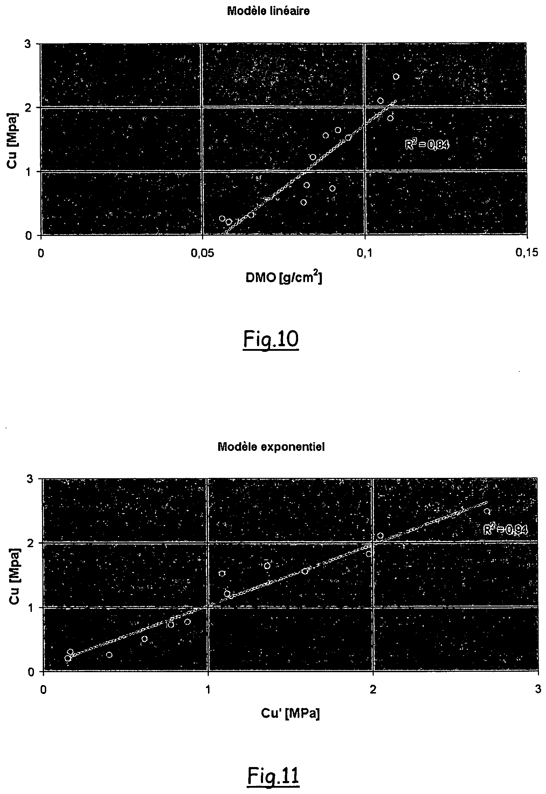

C'est la représentation de la figure 9. La courbe de la figure 11 caractérise ce modèle exponentiel de $C_u'$ en fonction de $\underline{\alpha}$. On constate une faible dispersion comparée à celle du modèle linéaire dont la courbe est mentionnée à la figure 10.

Ceci est un exemple non limitatif qui montre la possibilité de lier la densité osseuse dont la valeur est déterminée à partir d'une image 2D, à un paramètre de structure déterminé à partir de cette même image 2D pour obtenir la contrainte ultime $C_u$.

On constate qu'il est possible de déterminer une corrélation entre le paramètre $\underline{\alpha}$ évalué à partir de l'image 2D et une caractéristique 3D du réseau trabéculaire de l'os comme la densité de connectivité $\chi_v$.

On peut ainsi donner un exemple obtenue à partir d'images osseuses fémorales obtenue absorptiométrie à double énergie qui remplace une image obtenue par rayons X ou Gamma de faible énergie.

Ces images sont celles l'une d'une jeune femme de 17 ans et l'autre d'une femme âgée de 69 ans. Les images 2D ainsi obtenues sont analysées suivant le procédé de l'invention.

On constate à la mesure de la DMO les mêmes valeurs obtenues directement par le système densitométrique, dans les deux cas : 0,730 g/cm$^2$ dans la zone trochantérielle.

Les paramètres $\underline{\alpha}$ calculés sont respectivement 0,56 pour le sujet jeune et 0,71 pour le sujet âgé, montrant ainsi une différence notable et le paramètre $\underline{\alpha}$ le plus faible correspond à la meilleure résistance mécanique de l'os $C_u$, celui du sujet le moins âgé.

## Revendications

1. Procédé de détermination de la résistance mécanique d'un os à partir d'une image 2D numérisée, obtenue par imagerie et choisie dans une région présentant une structure trabéculaire, **caractérisé en ce que** l'on réalise une corrélation entre la densité minérale osseuse DMO déterminée à partir de cette image 2D par tout moyen adapté à ce type d'image et un paramètre de structure obtenu à partir de la même image 2D.

2. Procédé de détermination de la résistance mécanique d'un os selon la revendication 1, **caractérisé en ce que** l'on recourt à une corrélation de type exponentielle.

3. Procédé de détermination selon la revendication 1 ou 2, **caractérisé en ce que** la corrélation associant la densité minérale osseuse et ledit paramètre de structure est utilisée pour déterminer la contrainte ultime $C_u$ de l'os.

4. Procédé de détermination de la résistance mécanique d'un os selon l'une quelconque des revendications précédentes, **caractérisé en ce que** l'on détermine le paramètre de structure $\underline{\alpha}$ obtenu par la succession des étapes suivantes :

   a) choisir au hasard un pixel de l'image 2D qui est à un niveau de gris h(0),
   b) choisir une droite issue de ce point ayant une direction également déterminée au hasard,
   c) se déplacer d'une distance $\underline{r}$ sur cette droite, h(r) étant le niveau de gris de ce nouveau point,
   d) calculer la variance des niveaux de gris avec la formule : $V(r) = [h(r) - h(0)]^2$,
   e) tracer la courbe associée à V(r) en échelle log-log, et
   f) déterminer la pente de cette courbe log-log qui représente ledit paramètre $\underline{\alpha}$.

5. Procédé de détermination de la résistance mécanique d'un os selon la revendication 4, **caractérisé en ce que** l'on répète les étapes a) à d) un nombre de fois suffisamment grand pour faire converger la fonction variance V(r), moyennée sur l'ensemble des itérations.

6. Procédé de détermination de la résistance mécanique d'un os selon la revendication 4 ou 5, **caractérisé en ce que** l'on réalise une corrélation entre la densité minérale osseuse, DMO, obtenue à partir de cette image 2D et ledit paramètre $\underline{\alpha}$ évalué à partir de la même image 2D suivant le modèle mathématique :

$$C_u' = b_0 + b_1 * exp\,(b_2 * DMO) * \alpha$$

- avec $b_0$, $b_1$, $b_2$ qui sont des coefficients obtenus par régression non linéaire et $C_u'$ la prédiction de la contrainte ultime $C_u$ de l'os.

7. Procédé de détermination de la résistance mécanique d'un os selon l'une quelconque des revendications 4, 5 ou 6, **caractérisé en ce que** l'on détermine une corrélation entre le paramètre $\underline{\alpha}$ et un paramètre 3D du réseau trabéculaire de l'os.

8. Procédé de détermination de la résistance mécanique d'un os selon la revendication 7, **caractérisé en ce que** le paramètre 3D du réseau trabéculaire de l'os est la densité de connectivité $\chi_v$

**Patentansprüche**

1. Verfahren zur Messung des mechanischen Widerstands eines Knochens anhand eines digitalen 2D-Bilds, das durch Bildverarbeitung eines Bereichs mit trabekulärem Knochengewebe erhalten und ausgewählt wird, **dadurch gekennzeichnet, dass** man zwischen der anhand dieses 2D-Bilds bestimmten Knochendichte ODM durch geeignete Mittel für diesen Bildtyp und einem anhand desselben 2D-Bilds erhaltenen Gewebeparameter eine Korrelation herstellt.

2. Verfahren zur Messung des mechanischen Widerstands eines Knochens nach Anspruch 1, **dadurch gekennzeichnet, dass** man eine exponentiale Korrelation anwendet.

3. Verfahren zur Messung des mechanischen Widerstands eines Knochens nach Anspruch 1 oder 2, **dadurch gekennzeichnet, dass** die die Knochendichte und den Gewebeparameter verbindende Korrelation verwendet wird, um die äußerste Belastung $C_u$ des Knochens zu bestimmen.

4. Verfahren zur Messung des mechanischen Widerstands eines Knochens nach einem der vorausgehenden Ansprüche, **dadurch gekennzeichnet, dass** man den erhaltenen Gewebeparameter $\underline{\alpha}$ durch die Aneinanderreihung folgender Schritte bestimmt:

   a) zufälliges Auswählen eines Pixels des 2D-Bilds, das einen Grauwert h(0) hat,
   b) Auswählen einer von diesem Punkt ausgehenden Geraden mit einer ebenfalls zufällig bestimmten Richtung,
   c) sich um eine Distanz $\underline{r}$ auf dieser Geraden bewegen, wobei h(r) der Grauwert dieses neuen Punkts ist,
   d) die Varianz der Grauwerte mit der Formel $V(r) = [h(r) - h(0)]^2$ berechnen,
   e) die mit V(r) assoziierte Kurve in doppelt logarithmischer Darstellung zeichnen, und
   f) die Steigung dieser doppelt logarithmischen Kurve, die den Parameter $\underline{\alpha}$ darstellt, bestimmen.

5. Verfahren zur Messung des mechanischen Widerstands eines Knochens nach Anspruch 4, **dadurch gekennzeichnet, dass** die Schritte a) bis d) ausreichend oft wiederholt werden, um die Varianzfunktion V(r) mit dem Mittelwert aller Iterationen übereinstimmen zu lassen.

6. Verfahren zur Messung des mechanischen Widerstands eines Knochens nach Anspruch 4 oder 5, **dadurch gekennzeichnet, dass** man zwischen der anhand dieses 2D-Bilds erhaltenen Knochendichte OMD und dem anhand desselben 2D-Bilds evaluierten Parameter $\underline{\alpha}$ gemäß folgendem mathematischen Modell eine Korrelation herstellt:

$$C_u' = b_0 + b_1 * exp\,(b_2 * OMD) * \alpha$$

- wobei $b_0$, $b_1$ und $b_2$ durch nicht lineare Regression erhaltene Koeffizienten und $C_u'$ die voraussichtliche äußerste Belastung $C_u$ des Knochen sind.

7. Verfahren zur Messung des mechanischen Widerstands eines Knochens nach einem der Ansprüche 4, 5 oder 6, **dadurch gekennzeichnet, dass** man zwischen dem Parameter $\underline{\alpha}$ und einem 3D-Parameter des trabekulären Knochengewebes eine Korrelation herstellt.

8. Verfahren zur Messung des mechanischen Widerstands eines Knochens nach Anspruch 7, **dadurch gekennzeichnet, dass** der 3D-Parameter des trabekulären Knochengewebes die Vernetzungsdichte $\chi_v$ ist.

**Claims**

1. A method of determining the mechanical strength of a bone from a digitised 2D image, obtained by imaging and chosen in a region having a trabecular structure, **characterised in that** a correlation is made between the bone mineral density BMD determined from said 2D image by any means suited to said type of image and a structure parameter obtained from the same 2D image.

2. A method of determining the mechanical strength of a bone according to claim 1, **characterised in that** use is made of a correlation of the exponential type.

3. A determination method according to claim 1 or 2, **characterised in that** the correlation associating the bone mineral density and said structure parameter is used for determining the ultimate stress $C_u$ of the bone.

4. A method of determining the mechanical strength of a bone according to any one of the preceding claims, **characterised in that** a determination is made of the structure parameter $\alpha$ obtained by the following succession of steps:

   a) choosing at random a pixel of the 2D image that is at a grey level h(0),
   b) choosing a straight line issuing from this point having a direction also determined randomly,
   c) moving by a distance $\underline{r}$ on said straight line, h(r) being the grey level of said new point,
   d) calculating the variance in the grey levels by the formula: $V(r) = [h(r) - h(0)]^2$,
   e) tracing the curve associated with V(r) on a log-log scale, and
   f) determining the slope of said log-log curve that represents said parameter $\underline{\alpha}$.

5. A method of determining the mechanical strength of a bone according to claim 4, **characterised in that** steps a) to d) are repeated a sufficiently large number of times to make the variance function V(r), averaged over all the iterations, converge.

6. A method of determining the mechanical strength of a bone according to claim 4 or 5, **characterised in that** a correlation is made between the bone mineral density, BMD, obtained from said 2D image and said parameter $\underline{\alpha}$ evaluated from the same 2D image in accordance with the mathematical model:

$$C_u{}' = b_0 + b_1{}^* \exp (b_2 {}^* DMO) {}^* \alpha$$

   - with $b_0$, $b_1$, $b_2$ that are coefficients obtained by non-linear regression and $C_u{}'$ the prediction of the ultimate stress $C_u$ of the bone.

7. A method of determining the mechanical strength of a bone according to any one of claims 4, 5 or 6, **characterised in that** a correlation is determined between the parameter $\underline{\alpha}$ and a 3D parameter of the trabecular lattice of the bone.

8. A method of determining the mechanical strength of a bone according to claim 7, **characterised in that** the 3D parameter of the trabecular lattice of the bone is the connectivity density $\chi_v$.

**Modèle linéaire**

Fig.1

**Modèle exponentiel**

Fig.2

<u>Fig 3</u>

<u>Fig.4</u>

Fig.5

Fig.6

Fig.7

Fig.8

Fig.9

Modèle linéaire

Fig.10

Modèle exponentiel

Fig.11

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5774520 A
- US 6385283 B
- WO 8607531 A